# EUROPÄISCHE PATENTSCHRIFT

(11) **EP 3 486 972 B1**
(45) Veröffentlichungstag und Bekanntmachung des Hinweises auf die Patenterteilung: **22.01.2025**
(21) Anmeldenummer: 18207207.4
(22) Anmeldetag: 20.11.2018
(51) Int. Cl.: H01M 10/42

(54) **BATTERIESYSTEM**
BATTERY SYSTEM
SYSTEME DE BATTERIE

(30) Priorität: 20.11.2017 DE 102017010696
(43) Veröffentlichungstag der Anmeldung: 22.05.2019
(73) Patentinhaber: Marquardt GmbH, 78604 Rietheim-Weilheim (DE)
(72) Erfinder: Becher, Andreas, 78052 Villingen-Schwenningen (DE)
(74) Vertreter: Staeger & Sperling Partnerschaftsgesellschaft mbB

(56) Entgegenhaltungen:
- WO-A1-2015/175350
- US-A1- 2003 102 842

## Beschreibung

Die Erfindung betrifft eine Batterie und/oder einen Akkumulator nach dem Oberbegriff des Patentanspruchs 1.

Solche wiederaufladbaren Batterien bzw. Akkumulatoren dienen zur Energieversorgung eines elektrischen Verbrauchers und werden für eine Vielzahl von batteriebetriebenen Geräten, wie Elektrowerkzeugen, Elektrogartengeräten o. dgl., sowie auch für elektrische Kraftfahrzeuge, beispielsweise Elektromobile, Hybridfahrzeuge, Pedelecs, Elektroroller o. dgl., verwendet. Bei den Batterien bzw. Akkumulatoren kann es sich sowohl um wechselbare als auch in den Geräten fest verbaute Batterien bzw. Akkumulatoren handeln.

Eine derartige Batterie und/oder ein derartiger Akkumulator weisen wenigstens eine elektrische Zelle, also eine Batterie- und/oder Akkumulatorzelle auf. Die Batterie und/oder der Akkumulator besitzen einen elektrischen Anschluss für den elektrischen Verbraucher. Weiter ist eine Versorgungsleitung zur elektrischen Verbindung der Zelle mit dem elektrischen Anschluss vorgesehen, wobei die Versorgungsleitung zum Transport der elektrischen Energie von der Zelle zum elektrischen Anschluss dient. Es hat sich herausgestellt, dass manche Anwender missbräuchlich Batterien und/oder Akkumulatoren zur Energieversorgung von Geräten trotz fehlender Berechtigung und/oder für Geräte, für die diese Batterien und/oder Akkumulatoren nicht vorgesehen sind, verwenden. Des Weiteren sind diese Batterien und/oder Akkumulatoren nicht für eine zeitlich begrenzte Verwendung vorgesehen.

In der WO 2015/175350 A1 wird eine Vorrichtung beschrieben, um ferngesteuert die Energieversorgung eines Verbrauchers aus einer Batterie zu unterbrechen.

In der Druckschrift US 2003/0102842 wird ein Batteriepack mit einer Autorisierungseinheit beschrieben, die mit einem elektrischen Gerät kommuniziert, das mit dem Batteriepack verbunden wird.

Der Erfindung liegt die Aufgabe zugrunde, die Batterie und/oder den Akkumulator so auszugestalten, dass ein o.a. Missbrauch verhindert ist. Insbesondere sollen die Batterie und/oder der Akkumulator auch für eine temporäre Nutzung geeignet sein. Dadurch soll insbesondere ein Verleihsystem von Batterien und/oder Akkumulatoren in der Art eines Sharing geschaffen werden, derart dass die Batterie und/oder der Akkumulator von einem autorisierten Nutzer nur in den gebuchten Zeiten genutzt werden kann, also für eine temporäre Nutzung, und somit die Nutzungszeit auch nachweislich abgerechnet werden kann.

Diese Aufgabe wird bei einer gattungsgemäßen Batterie und/oder einem gattungsgemäßen Akkumulator durch die kennzeichnenden Merkmale des Anspruchs 1 gelöst.

Bei der erfindungsgemäßen Batterie und/oder dem erfindungsgemäßen Akkumulator sind eine Autorisierungseinheit zur Überwachung der temporären oder dauerhaften Berechtigung für die Energieversorgung, insbesondere für die Energieversorgung des Verbrauchers, sowie ein von der Autorisierungseinheit betätigbares Schaltmittel für die Versorgungsleitung vorgesehen. Die Versorgungsleitung ist mittels des Schaltmittels bei fehlender temporärer oder dauerhafter Berechtigung abschaltbar sowie bei vorliegender temporärer oder dauerhafter Berechtigung zuschaltbar. Das Schaltmittel ist damit in der Art eines Stromfreigabeschalters von der Autorisierungseinheit lediglich dann aktivierbar, wenn die Autorisierungseinheit die temporäre oder dauerhafte Berechtigung der Batterie und/oder des Akkumulators zur Energieversorgung mittels der Batterie und/oder des Akkumulators an sich und/oder zur Energieversorgung des jeweiligen Verbrauchers positiv feststellt. In vorteilhafter Weise ist eine missbräuchliche Energieversorgung eines Verbrauchers durch die Batterie und/oder den Akkumulator folglich wirksam verhindert. Des Weiteren ist dadurch auch eine temporäre Nutzung der Batterie und/oder des Akkumulators nachweisbar möglich. Weitere Ausgestaltungen der Erfindung sind Gegenstand der Unteransprüche.

In einer einfachen sowie funktionssicheren weiteren Ausgestaltung kann es sich bei dem Schaltmittel um einen elektrischen Schalter, ein Relais, einen Halbleiterschalter o. dgl. handeln. Das Schaltmittel kann wiederum in der Versorgungsleitung angeordnet sein.

Zwecks einfacher sowie komfortabler Handhabung für den Anwender kann die temporäre oder dauerhafte Berechtigung von einem Berechtigungsträger zur Autorisierungseinheit übertragbar sein.

Bei dem Berechtigungsträger handelt es sich um einen mobilen, vom Benutzer trag- und/oder mitführbaren Berechtigungsträger, wie um einen elektronischen Schlüssel, eine Chipkarte, ein Mobilgerät, beispielsweise ein Smartphone, o. dgl., .

Der Berechtigungsträger kann flexible Berechtigungen, die beispielsweise die Berechtigung für mehrere Verbraucher umfassen, und/oder temporäre, d.h. zeitlich begrenzte, Berechtigungen für die Energieversorgung verwalten und/oder zur Ausführung bereitstellen. Mit anderen Worten kann es sich bei solchen flexiblen Berechtigungen beispielsweise um eine zeitlich beschränkte Berechtigung, um eine für diverse Verbraucher gültige Berechtigung o. dgl. handeln. Insbesondere kann bei Verleihsystemen von Batterien und/oder Akkumulatoren in der Art eines Sharing dadurch sichergestellt werden, dass die Batterien und/oder Akkumulatoren von autorisierten Nutzern nur in den gebuchten Zeiten, also in temporärer Nutzung, genutzt werden können. Folglich kann die tatsächliche Nutzungszeit auch nachweislich abgerechnet werden, da alle Berechtigungen in der Autorisierungseinheit hinterlegt sind. Um die Benutzerfreundlichkeit für den Anwender weiter zu steigern, kann eine Drahtlos-Schnittstelle mit der Autorisierungseinheit in Verbindung stehen, derart dass die Berechtigung drahtlos vom Berechtigungsträger zur Autorisierungseinheit übertragbar ist. Des Weiteren kann die Drahtlos-Schnittstelle zur Übertragung der Berechtigung kryptografisch abgesichert sein, womit die Missbrauchssicherheit weiter gesteigert ist. Schließlich kann die Absicherung asymmetrisch kryptografisch durch Verschlüsselung der vom Berechtigungsträger zur Drahtlos-Schnittstelle übertragenen Berechtigung erfolgen.

In einer kompakten sowie funktionssicheren Ausgestaltung kann ein Batteriesteuergerät zur Überwachung und/oder Steuerung des Betriebs der Zelle vorgesehen sein. Die Autorisierungseinheit kann derart mit dem Batteriesteuergerät in Verbindung stehen, dass die Autorisierungseinheit bei einer unzulässigen Betriebsbedingung die Versorgungsleitung abschaltet. Dadurch wird in vorteilhafter Weise gleichzeitig die Betriebssicherheit der Batterie und/oder des Akkumulators gesteigert.

Zweckmäßigerweise kann eine Kommunikationsschnittstelle für die Autorisierungseinheit zur Kommunikation mit dem Verbraucher, insbesondere zu einem Steuergerät im Verbraucher, vorgesehen sein. Die Identität des Verbrauchers kann, und zwar insbesondere mittels des Steuergeräts, über die Kommunikationsschnittstelle übertragbar sein, derart dass die Autorisierungseinheit bei einer unzulässigen Identität die Versorgungsleitung abschaltet. Somit ist sichergestellt, dass lediglich zulässige Verbraucher mittels der Batterie und/oder des Akkumulators betreibbar sind. Des Weiteren ist damit auch ein Diebstahlschutz für die Batterie und/oder den Akkumulator erzielt.

Zum Schutz vor äußeren Einflüssen kann ein Gehäuse für die Zelle und/oder für das Batteriesteuergerät und/oder für die Autorisierungseinheit und/oder für die Drahtlos-Schnittstelle vorgesehen sein. Zweckmäßigerweise können der elektrische Anschluss und/oder die Kommunikationsschnittstelle für den Anschluss des Verbrauchers zugänglich am Gehäuse angeordnet sein. Eine derartige Ausgestaltung ermöglicht dem Anwender einen einfachen Austausch der Batterie und/oder des Akkumulators für das zugehörige Elektrogerät. Des Weiteren können das Schaltmittel und/oder die Autorisierungseinheit und/oder das Batteriesteuergerät unzugänglich im Gehäuse angeordnet sein. Damit sind Manipulationen an der Batterie und/oder dem Akkumulator zumindest erschwert, womit ein missbräuchlicher und/oder unberechtigter Betrieb der Batterie und/oder des Akkumulators wirksam verhindert ist.

Die Erfindung stellt weiterhin ein Verfahren zum Betrieb einer Batterie und/oder eines Akkumulators bereit, wobei die Batterie und/oder der Akkumulator eine Autorisierungseinheit sowie eine Drahtlos-Schnittstelle umfassen. Das erfindungsgemäße Verfahren zeichnet sich dadurch aus, dass von einem, insbesondere mobilen, Berechtigungsträger über die Drahtlos-Schnittstelle eine verschlüsselte Autorisierungsanfrage an die Autorisierungseinheit übermittelt wird. Die Autorisierungsanfrage wird nachfolgend von der Autorisierungseinheit bezüglich der Berechtigung geprüft. Bei vorliegender Berechtigung wird dann der Stromfluss von der Batteriezelle zum elektrischen Anschluss mittels der Autorisierungseinheit aktiviert bzw. zugeschaltet. Die Aktivierung kann je nach Erfordernis temporär, also zeitlich begrenzt, oder auch dauerhaft erfolgen.

In einer weiteren, die Funktionssicherheit steigernden Ausgestaltung des erfindungsgemäßen Verfahrens wird der Stromfluss von der Batteriezelle zum elektrischen Anschluss mittels der Autorisierungseinheit deaktiviert bzw. abgeschaltet, wenn das Batteriesteuergerät eine unzulässige Betriebsbedingung feststellt.

In noch weiterer Ausgestaltung kann der Stromfluss von der Batteriezelle zum elektrischen Anschluss mittels der Autorisierungseinheit lediglich dann aktiviert bzw. zugeschaltet werden, wenn die an die Autorisierungseinheit übermittelte Identität des Verbrauchers zulässig ist. In vorteilhafter Weise kann dann kann bei der Autorisierung zusätzlich geprüft werden, ob die Batterie und/oder der Akkumulator in der jeweiligen Anwendung betrieben werden darf. Das bietet dann auch gleichzeitig einen flexiblen Diebstahlschutz für die Batterie und/oder den Akkumulator sowie für das entsprechende, mittels der Batterie und/oder des Akkumulators betriebene Gerät.

Für eine besonders bevorzugte Ausgestaltung der Erfindung ist nachfolgendes festzustellen.

Es gibt eine Vielzahl batteriebetriebener Anwendungen, wie Elektroheckenscheren, Pedelecs, E-Roller o. dgl., die mit wechselbaren Batteriepacks arbeiten, um einen möglichst durchgängigen Betrieb der Geräte sicherzustellen. Die Batteriepacks können dabei teilweise auch zwischen verschiedenen Anwendungen leicht gewechselt werden. Diese Flexibilität öffnet aber auch die Tür für Missbrauch.

Es ist aus der Offenlegungsschrift DE 10 2015 220 084 A1 ein Pedelec bekannt, bei dem die Teilsysteme des Pedelecs inklusive des Batteriepacks derart miteinander verbunden sind, dass das Batteriepack nur mit diesem Pedelec arbeitet. Ein solches System bietet lediglich einen Diebstahlschutz für ein bestimmtes Pedelec. Es stellt jedoch nicht das sichere und/oder flexible Wechseln von Batteriepacks zwischen verschiedenen Pedelecs bereit. Des Weiteren ist aus der Patentschrift EP 1 910 134 B1 ein System bekannt, bei dem flexible Berechtigungen über ein Smartphone an herkömmliche Kraftfahrzeuge verteilt werden können.

Bei der Erfindung wird das Batteriepack mit einer Autorisierungseinheit ausgerüstet, die über eine asymmetrisch kryptografisch abgesicherte Drahtlos-Schnittstelle mit einem Smartphone als Berechtigungsträger kommuniziert, wobei der Berechtigungsträger flexible Berechtigungen verwalten und/oder ausführen kann. Wenn nun vom Berechtigungsträger über die Drahtlos-Schnittstelle eine verschlüsselte Autorisierungsanfrage an die Autorisierungseinheit übermittelt wird, wird diese von der Autorisierungseinheit geprüft und bei Berechtigung aktiviert die Autorisierungseinheit den Stromfluss von den Batteriezellen im Batteriepack zur Anschlussklemme des Batteriepacks, sofern das interne Batteriemanagement dies aus Sicherheitsgründen zulässt. Damit liefert der Batteriepack Strom für die batteriebetriebene Anwendung. Mit Hilfe einer zusätzlichen Kommunikationsschnittstelle zwischen der Autorisierungseinheit des Batteriepacks und der Steuereinheit der batteriebetriebenen Anwendung kann die Anwendung der Autorisierungseinheit deren Identität sicher mitteilen und dann kann bei der Autorisierung zusätzlich geprüft werden, ob dieser Batteriepack in dieser Anwendung betrieben werden darf. Das bietet dann auch gleichzeitig einen flexiblen Diebstahlschutz für die Anwendung. Geschaffen ist somit ein flexibel aktivierbarer Batteriepack.

Die mit der Erfindung erzielten Vorteile bestehen insbesondere darin, dass eine flexible Aktivierung der Batterie und/oder des Akkumulators ermöglicht. Die Aktivierung kann auf bestimmte Anwender und/oder zeitlich begrenzt werden. Des Weiteren ist ein elektronischer Diebstahlschutz für die jeweilige Anwendung ermöglicht. Der Diebstahlschutz kann wiederum auf bestimmte Anwender und/oder zeitlich begrenzt werden. Mittels der asymmetrischen Kryptographie ist ein "Pairing" zwischen dem Berechtigungsträger sowie der Batterie und/oder dem Akkumulator nicht notwendig. Es wird eine maximale Energieeffizienz erreicht, weil ein unberechtigter und damit unerwünschter Gebrauch sowie der damit einhergehende Energieverbrauch der Batterie und/oder des Akkumulators vermieden wird. Es ist zudem ein einfaches berechtigtes Teilen von wechselbaren Batterien und/oder Akkumulatoren zwischen verschiedenen Anwendungen ermöglicht. Beispielsweise kann so der Austausch einer Batterie zwischen einem Pedelec und einem Elektroroller ermöglicht sein.

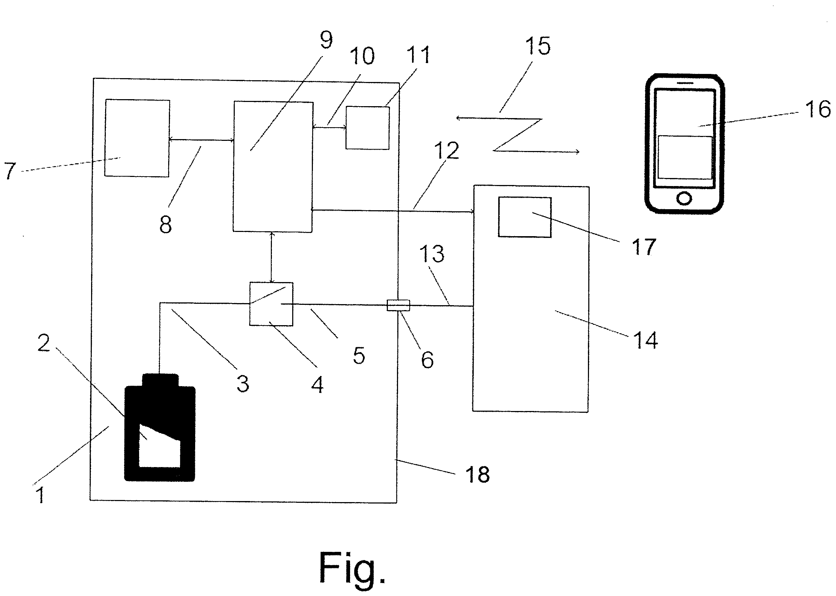

Ein Ausführungsbeispiel der Erfindung mit verschiedenen Weiterbildungen und Ausgestaltungen ist in der Zeichnung dargestellt und wird im folgenden näher beschrieben.

Es zeigt die
- Fig.: einen Verbraucher mit einer Batterie und/oder einem Akkumulator in schematischer Darstellung.

In der Fig. ist ein elektrischer Verbraucher 14 in einem Kraftfahrzeug zu sehen, der von einer Batterie und/oder einem Akkumulator 1 mit elektrischer Energie zu dessen Betrieb versorgbar ist. Die Batterie und/oder der Akkumulator 1 weist wenigstens eine elektrische Zelle 2 auf. Selbstverständlich können je nach Erfordernis auch mehrere Zellen 2 in der Batterie und/oder im Akkumulator 1 angeordnet sein, was jedoch der Einfachheit halber nachfolgend nicht näher beschrieben ist. An der Batterie und/oder dem Akkumulator 1 befindet sich ein elektrischer Anschluss 6 für den elektrischen Verbraucher 14, wobei der Verbraucher 14 mittels einer Zuleitung 13 mit dem elektrischen Anschluss 6 verbunden ist. Schließlich ist in der Batterie und/oder dem Akkumulator 1 noch eine Versorgungsleitung 5 zur elektrischen Verbindung der Zelle 2 mit dem elektrischen Anschluss 6 angeordnet.

In der Batterie und/oder dem Akkumulator 1 ist eine Autorisierungseinheit 9 zur Überwachung der Berechtigung für die Energieversorgung des Verbrauchers 14 vorgesehen. Selbstverständlich kann die Autorisierungseinheit 9 auch bereits zur Überwachung der Berechtigung für die Energieversorgung durch die Batterie und/oder den Akkumulator 1 an sich dienen. Weiter ist in der Batterie und/oder dem Akkumulator 1 ein von der Autorisierungseinheit 9 betätigbares Schaltmittel 4 für die Versorgungsleitung 5 vorgesehen. Die Versorgungsleitung 5 ist mittels des Schaltmittels 4 bei fehlender Berechtigung abschaltbar sowie bei vorliegender Berechtigung zuschaltbar. Das Schaltmittel 4 arbeitet somit in der Art eines Stromfreigabeschalters zur Aktivierung der Versorgungsleitung 5 bei gegebener Berechtigung. Das Schaltmittel 4, bei dem es sich um einen elektrischen Schalter, ein Relais, einen Halbleiterschalter o. dgl. handelt, ist in der Versorgungsleitung 5 angeordnet. Von der Zelle 2 führt wiederum eine Stromleitung 3 bis zum Schaltmittel 4.

Die Berechtigung für die Energieversorgung des Verbrauchers 14 ist von einem mobilen Berechtigungsträger 16 zur Autorisierungseinheit 9 übertragbar. Bei dem vom Benutzer tragbaren Berechtigungsträger 16 kann es sich um einen elektronischen Schlüssel, eine Chipkarte, ein Mobilgerät o. dgl. handeln. Besonders bevorzugt ist, für den Berechtigungsträger 16 ein als Smartphone ausgebildetes Mobilgerät zu verwenden. Der Berechtigungsträger 16 verwaltet flexible Berechtigungen und/oder stellt diese Berechtigungen für die Energieversorgung durch die Batterie und/oder den Akkumulator 1 zur Ausführung bereit. Die Berechtigungen können für den Verbraucher 14 zeitlich beschränkt, also temporär, sein und/oder auch für mehrere, diverse Verbraucher 14 vorgesehen sein. Weiter steht eine Drahtlos-Schnittstelle 11 mit der Autorisierungseinheit 9 über eine Berechtigungungsanfrageleitung 10 in Verbindung, derart dass die Berechtigung mittels einer drahtlosen Übertragung 15, beispielsweise über Funk, vom Berechtigungsträger 16 zur Autorisierungseinheit 9 übertragbar ist. Die Drahtlos-Schnittstelle 11 ist zwecks Verhinderung von Missbrauch zur Übertragung der Berechtigung asymmetrisch kryptografisch abgesichert, so dass die Berechtigung vom Berechtigungsträger 16 verschlüsselt zur Drahtlos-Schnittstelle 11 übertragen wird.

Weiter ist ein Batteriesteuergerät 7 zur Überwachung und/oder Steuerung des Betriebs der Zelle 2 vorgesehen. Die Autorisierungseinheit 9 steht mit dem Batteriesteuergerät 7 über eine Störfallmeldungsleitung 8 in Verbindung, derart dass die Autorisierungseinheit 9 bei einer unzulässigen Betriebsbedingung für die Zelle 2 die Versorgungsleitung 5 abschaltet. Das Batteriesteuergerät 7 dient daher als eine Art von Batteriemanagementsystem, das im Störfall eine Störfallmeldung erzeugt sowie die Stromführung zwischen der Zelle 2 und dem elektrischen Anschluss 6 mittels der Autorisierungseinheit 9 sowie mit Hilfe des Schaltmittels 4 trennt. Schließlich ist noch eine Kommunikationsschnittstelle 12 für die Autorisierungseinheit 9 zum Verbraucher 14, und zwar insbesondere zu einem Steuergerät 17 im Verbraucher 14, vorgesehen. Die Identität des Verbrauchers 14 ist mittels des Steuergeräts 17 über die Kommunikationsschnittstelle 12 zur Autorisierungseinheit 9 übertragbar. Dadurch ist die Autorisierungseinheit 9 in der Lage, bei einer unzulässigen Identität die Versorgungsleitung 5 abzuschalten.

Die Batterie und der Akkumulator 1 weist ein Gehäuse 18 auf. Im Gehäuse 18 sind die Zelle 2 und/oder das Batteriesteuergerät 7 und/oder die Autorisierungseinheit 9 und/oder die Drahtlos-Schnittstelle 11 und/oder das Schaltmittel 4 angeordnet. Der elektrische Anschluss 6 und/oder die Kommunikationsschnittstelle 12 sind für den Anschluss des Verbrauchers 14 zugänglich am Gehäuse 18 angeordnet. Das Schaltmittel 4 und/oder die Autorisierungseinheit 9 und/oder das Batteriesteuergerät 7 sind hingegen zum Schutz vor Manipulationen unzugänglich im Gehäuse 18 angeordnet.

Bei dem Verfahren zum Betrieb der Batterie und/oder des Akkumulators 1 wird vom Berechtigungsträger 16 über die Drahtlos-Schnittstelle 11 eine verschlüsselte Autorisierungsanfrage an die Autorisierungseinheit 9 übermittelt. Die Autorisierungsanfrage wird von der Autorisierungseinheit 9 bezüglich der Berechtigung geprüft. Bei vorliegender Berechtigung aktiviert dann die Autorisierungseinheit 9 den Stromfluss von der Batteriezelle 2 zum elektrischen Anschluss 6. Mit anderen Worten schaltet die Autorisierungseinheit 9 die Versorgungsleitung 5 bei entsprechender Berechtigung zu und andernfalls ab. Je nach Berechtigung kann die Versorgungsleitung 5 dann dauerhaft oder auch temporär eingeschaltet sein. Des Weiteren deaktiviert die Autorisierungseinheit 9 den Stromfluss von der Batteriezelle 2 zum elektrischen Anschluss 6 beziehungsweise schaltet den Stromfluss ab, wenn das Batteriesteuergerät 7 eine unzulässige Betriebsbedingung feststellt. Schließlich aktiviert die Autorisierungseinheit 9 den Stromfluss von der Batteriezelle 2 zum elektrischen Anschluss 6 lediglich dann beziehungsweise schaltet den Stromfluss lediglich dann zu, wenn die an die Autorisierungseinheit 9 übermittelte Identität des Verbrauchers 14 zulässig ist. Somit kann bei der Autorisierung beziehungsweise bei der Feststellung des Vorliegens der Berechtigung zusätzlich geprüft werden, ob diese Batterie und/oder dieser Akkumulator 1 in der jeweiligen Anwendung betrieben werden darf. Dadurch ist auch gleichzeitig ein flexibler Diebstahlschutz in der jeweiligen Anwendung gewährleistet.

Die Erfindung ist nicht auf die beschriebenen und dargestellten Ausführungsbeispiele beschränkt. Sie umfasst vielmehr auch alle fachmännischen Weiterbildungen im Rahmen der durch die Patentansprüche definierten Erfindung. So kann die Erfindung nicht nur in Kraftfahrzeugen eingesetzt werden, sondern kann auch in allen sonstigen batteriebetriebenen Anwendungen, wie Pedelecs, Elektroroller, Haushaltsgeräten, Gartengeräten, beispielsweise Elektroheckenscheren, Elektrowerkzeugen o. dgl., Verwendung finden.

### Bezugszeichen-Li ste:

- 1:: Batterie und/oder Akkumulator
- 2:: (elektrische) Zelle / Batteriezelle
- 3:: Stromleitung
- 4:: Schaltmittel
- 5:: Versorgungsleitung
- 6:: (elektrischer) Anschluss
- 7:: Batteriesteuergerät
- 8:: Störfallmeldungsleitung
- 9:: Autorisierungseinheit
- 10:: Berechtigungsanfrageleitung
- 11:: Drahtlos-Schnittstelle
- 12:: Kommunikationsschnittstelle
- 13:: Zuleitung
- 14:: Verbraucher
- 15:: (drahtlose) Übertragung
- 16:: Berechtigungsträger
- 17:: Steuergerät (im Verbraucher)
- 18:: Gehäuse

## Patentansprüche

1. Batterie und/oder Akkumulator zur Energieversorgung eines elektrischen Verbrauchers (14), mit wenigstens einer elektrischen Zelle (2), mit einem elektrischen Anschluss (6) für den elektrischen Verbraucher (14), und mit einer Versorgungsleitung (5) zur elektrischen Verbindung der Zelle (2) mit dem elektrischen Anschluss (6), wobei eine Autorisierungseinheit (9) zur Überwachung der Berechtigung für die Energieversorgung, insbesondere des Verbrauchers (14), vorgesehen ist, wobei die Berechtigung von einem mobilen, Berechtigungsträger (16), wie einem elektronischen Schlüssel, einer Chipkarte, einem Mobilgerät, beispielsweise einem Smartphone, o. dgl., zur Autorisierungseinheit (9) übertragbar ist und ein von der Autorisierungseinheit (9) betätigbares Schaltmittel (4) für die Versorgungsleitung (5) vorgesehen ist, derart dass die Versorgungsleitung (5) mittels des Schaltmittels (4) bei fehlender Berechtigung abschaltbar sowie bei vorliegender Berechtigung zuschaltbar ist **dadurch gekennzeichnet, dass** eine Kommunikationsschnittstelle (12) für die Autorisierungseinheit (9) zur Kommunikation mit dem Verbraucher (14) zu einem Steuergerät (17) im Verbraucher (14), vorgesehen ist, und dass die Identität des Verbrauchers (14) mittels des Steuergeräts (17) über die Kommunikationsschnittstelle (12) übertragbar ist, derart dass die Autorisierungseinheit (9) bei einer unzulässigen Identität die Versorgungsleitung (5) abschaltet.

2. Batterie und/oder Akkumulator nach Anspruch 1, **dadurch gekennzeichnet, dass** es sich bei dem Schaltmittel (4) um einen elektrischen Schalter, ein Relais, einen Halbleiterschalter o. dgl. handelt, und dass vorzugsweise das Schaltmittel (4) in der Versorgungsleitung (5) angeordnet ist.

3. Batterie und/oder Akkumulator nach Anspruch 1 oder 2, **dadurch gekennzeichnet, dass**, der Berechtigungsträger (16) flexible Berechtigungen, insbesondere für mehrere Verbraucher (14), und/oder temporäre Berechtigungen für die Energieversorgung verwaltet und/oder zur Ausführung bereitstellt, dass weiter vorzugsweise eine Drahtlos-Schnittstelle (11) mit der Autorisierungseinheit (9) in Verbindung steht, derart dass die Berechtigung drahtlos vom Berechtigungsträger (16) zur Autorisierungseinheit (9) übertragbar ist, und dass noch weiter vorzugsweise die Drahtlos-Schnittstelle (11) zur Übertragung der Berechtigung asymmetrisch kryptografisch abgesichert ist.

4. Batterie und/oder Akkumulator nach Anspruch 1, 2 oder 3, **dadurch gekennzeichnet, dass** ein Batteriesteuergerät (7) zur Überwachung und/oder Steuerung des Betriebs der Zelle (2) vorgesehen ist, und dass vorzugsweise die Autorisierungseinheit (9) mit dem Batteriesteuergerät (7) in Verbindung steht, derart dass die Autorisierungseinheit (9) bei einer unzulässigen Betriebsbedingung die Versorgungsleitung (5) abschaltet.

5. Batterie und/oder Akkumulator nach einem der Ansprüche 1 bis 4, **dadurch gekennzeichnet, dass** ein Gehäuse (18) für die Zelle (2) und/oder für das Batteriesteuergerät (7) und/oder für die Autorisierungseinheit (9) und/oder für die Drahtlos-Schnittstelle (11) vorgesehen ist, dass vorzugsweise der elektrische Anschluss (6) und/oder die Kommunikationsschnittstelle (12) für den Anschluss des Verbrauchers (14) zugänglich am Gehäuse (18) angeordnet sind, und dass weiter vorzugsweise das Schaltmittel (4) und/oder die Autorisierungseinheit (9) und/oder das Batteriesteuergerät (7) unzugänglich im Gehäuse (18) angeordnet sind.

6. Verfahren zum Betrieb einer Batterie und/oder eines Akkumulators (1)nach einem der vorhergehenden Ansprüche, **dadurch gekennzeichnet, dass** vom Berechtigungsträger (16) über die Drahtlos-Schnittstelle (11) eine verschlüsselte Autorisierungsanfrage an die Autorisierungseinheit (9) übermittelt wird, dass die Autorisierungsanfrage von der Autorisierungseinheit (9) bezüglich der Berechtigung geprüft wird, und dass bei vorliegender Berechtigung die Autorisierungseinheit (9) den Stromfluss von der Batteriezelle (2) zum elektrischen Anschluss (6), insbesondere temporär oder dauerhaft, aktiviert.

7. Verfahren zum Betrieb einer Batterie und/oder eines Akkumulators (1) nach Anspruch 6, **dadurch gekennzeichnet, dass** die Autorisierungseinheit (9) den Stromfluss von der Batteriezelle (2) zum elektrischen Anschluss (6) deaktiviert, wenn das Batteriesteuergerät (7) eine unzulässige Betriebsbedingung feststellt.

8. Verfahren zum Betrieb einer Batterie und/oder eines Akkumulators (1) nach Anspruch 6 oder 7, **dadurch gekennzeichnet, dass** die Autorisierungseinheit (9) den Stromfluss von der Batteriezelle (2) zum elektrischen Anschluss (6) lediglich dann aktiviert, wenn die an die Autorisierungseinheit (9) übermittelte Identität des Verbrauchers (14) zulässig ist.

## Claims

1. A battery and/or an accumulator for energy supply of an electrical consumer (14), with at least one electrical cell (2), with an electrical port (6) for the electrical consumer (14), and with a supply line (5) for the electrical connection of the cell (2) to the electrical port (6), wherein an authorisation unit (9) for monitoring the permission for the energy supply, in particular the consumer (14), is provided, wherein the permission can be transferred from a mobile permission carrier (16), such as an electronic key, a chip card, a mobile device, for example a smartphone, or the like, to the authorisation unit (9) and a switching means (4) operable by the authorisation unit (9) is provided for the supply line (5), so that the supply line (5) can be switched off by means of the switching means (4) in case of a lacking permission and can be switched on if a permission is present,
**characterised in that** a communication interface (12) for the authorisation unit (9) for communication with the consumer (14) to a control device (17) in the consumer (14) is provided, and **in that** the identity of the consumer (14) can be transferred by means of the control device (17) over the communication interface (12) so that the authorisation unit (9) switches the supply line (5) off in case of an unauthorised identity.

2. The battery and/or the accumulator according to claim 1, **characterised in that** the switching means (4) is an electrical switch, a relay, a semiconductor switch or the like, and **in that** preferably the switching means (4) is arranged in the supply line (5).

3. The battery and/or the accumulator according to claim 1 or 2, **characterised in that** the permission carrier (16) manages flexible permissions, in particular for several consumers (14), and/or temporary permissions for the energy supply and/or provides them for execution, that further preferably a wireless interface (11) is connected to the authorisation unit (9) so that the permission can be wirelessly transmitted from the permission carrier (16) to the authorisation unit (9), and **in that** still further preferably the wireless interface (11) for transmission of the permission is asymmetrically cryptographically secured.

4. The battery and/or the accumulator according to claim 1, 2 or 3, **characterised in that** a battery control device (7) for monitoring and/or controlling the operation of the cell (2) is provided and **in that** preferably the authorisation unit (9) is connected to the battery control device (7) so that the authorisation unit (9) switches the supply line (5) off in case of an unauthorised operating condition.

5. The battery and/or the accumulator according to any one of claims 1 to 4, **characterised in that** a housing (18) for the cell (2) and/or for the battery control device (7) and/or for the authorisation unit (9) and/or for the wireless interface (11) is provided, and **in that** preferably the electrical port (6) and/or the communication interface (12) is arranged on the housing (18) so that it is accessible for the port of the consumer (14), and **in that** further preferably the switching means (4) and/or the authorisation unit (9) and/or the battery control device (7) are arranged in the housing (18) in an inaccessible manner.

6. A method for operating a battery and/or an accumulator (1) according to any one of the preceding claims, **characterised in that** an encrypted authorisation request is transmitted to the authorisation unit (9) by the permission carrier (16) via the wireless interface (11), that the authorisation request is checked by the authorisation unit (9) with regard to the permission, and that, if a permission is present, the authorisation unit (9) activates the current flow from the battery cell (2) to the electrical port (6), in particular temporarily or permanently.

7. The method for operating a battery and/or an accumulator (1) according to claim 6, **characterised in that** the authorisation unit (9) deactivates the current flow from the battery cell (2) to the electrical port (6) if the battery control device (7) determines an unauthorised operating condition.

8. The method for operating a battery and/or an accumulator (1) according to claim 6 or 7, **characterised in that** the authorisation unit (9) only activates the current flow from the battery cell (2) to the electrical port (6) if the identity of the consumer (14) transmitted to the authorisation unit (9) is permitted.

## Revendications

1. Batterie et/ou accumulateur pour l'alimentation en énergie d'un consommateur électrique (14), comprenant au moins une cellule électrique (2), une borne électrique (6) pour le consommateur électrique (14) et une ligne d'alimentation (5) pour la liaison électrique de la cellule (2) à la borne électrique (6), dans laquelle/lequel une unité d'autorisation (9) est prévue pour surveiller l'autorisation de l'alimentation en énergie, en particulier du consommateur (14), dans laquelle/lequel l'autorisation peut être transmise d'un support d'autorisation mobile (16), tel qu'une clé électronique, une carte à puce, un appareil mobile, par exemple un smartphone, ou similaires à l'unité d'autorisation (9), et un moyen de commutation (4) pouvant être actionné par l'unité d'autorisation (9) est prévu pour la ligne d'alimentation (5) de telle sorte que la ligne d'alimentation (5) peut être mise hors circuit au moyen du moyen de commutation (4) en l'absence d'une autorisation et peut être mise en circuit en présence d'une autorisation,
caractérisé(e) en ce qu'une interface de communication (12) est prévue pour l'unité d'autorisation (9) pour la communication par le consommateur (14) avec un appareil de commande (17) dans le consommateur (14), et en ce que l'identité du consommateur (14) peut être transmise au moyen de l'appareil de commande (17) par l'intermédiaire de l'interface de communication (12) de sorte que l'unité d'autorisation (9) met la ligne d'alimentation (5) hors circuit en cas d'identité non valable.

2. Batterie et/ou accumulateur selon la revendication 1, caractérisé(e) en ce que le moyen de commutation (4) est un commutateur électrique, un relais, un commutateur à semi-conducteur ou similaires, et en ce que de préférence le moyen de commutation (4) est disposé dans la ligne d'alimentation (5).

3. Batterie et/ou accumulateur selon la revendication 1 ou 2, caractérisé(e) en ce que le support d'autorisation (16) gère et/ou fournit pour l'exécution des autorisations flexibles, en particulier pour plusieurs consommateurs (14), et/ou des autorisations temporaires pour l'alimentation en énergie, en ce qu'en outre de préférence une interface sans fil (11) communique avec l'unité d'autorisation (9) de telle sorte que l'autorisation peut être transmise sans fil du support d'autorisation (16) à l'unité d'autorisation (9), et en ce que de plus grande préférence encore, l'interface sans fil (11) est sécurisée de manière asymétriquement cryptographique pour la transmission de l'autorisation.

4. Batterie et/ou accumulateur selon la revendication 1, 2 ou 3, caractérisé(e) en ce qu'un appareil de commande de batterie (7) permettant de surveiller et/ou de commander le fonctionnement de la cellule (2) est prévu, et en ce que de préférence l'unité d'autorisation (9) communique avec l'appareil de commande de batterie (7) de telle sorte que l'unité d'autorisation (9) met la ligne d'alimentation (5) hors circuit en cas de condition de fonctionnement non valable.

5. Batterie et/ou accumulateur selon l'une quelconque des revendications 1 à 4, caractérisé(e) en ce qu'un boîtier (18) est prévu pour la cellule (2) et/ou pour l'appareil de commande de batterie (7) et/ou pour l'unité d'autorisation (9) et/ou pour l'interface sans fil (11), en ce que de préférence la borne électrique (6) et/ou l'interface de communication (12) pour la connexion du consommateur (14) sont disposées de manière accessible sur le boîtier (18), et en ce que de préférence en plus, le moyen de commutation (4) et/ou l'unité d'autorisation (9) et/ou l'appareil de commande de batterie (7) sont disposés de manière inaccessible dans le boîtier (18).

6. Procédé permettant de faire fonctionner une batterie et/ou un accumulateur (1) selon l'une quelconque des revendications précédentes, **caractérisé en ce que** le support d'autorisation (16) transmet à l'unité d'autorisation (9) une demande d'autorisation chiffrée par l'intermédiaire de l'interface sans fil (11), **en ce que** la demande d'autorisation est vérifiée par l'unité d'autorisation (9) concernant l'autorisation, et **en ce qu'**en présence d'une autorisation, l'unité d'autorisation (9) active le flux de courant de la cellule de batterie (2) à la borne électrique (6), en particulier de manière temporaire ou permanente.

7. Procédé permettant de faire fonctionner une batterie et/ou un accumulateur (1) selon la revendication 6, **caractérisé en ce que** l'unité d'autorisation (9) désactive le flux de courant de la cellule de batterie (2) à la borne électrique (6) si l'appareil de commande de batterie (7) constate une condition de fonctionnement non valable.

8. Procédé permettant de faire fonctionner une batterie et/ou un accumulateur (1) selon la revendication 6 ou 7, **caractérisé en ce que** l'unité d'autorisation (9) n'active le flux de courant de la cellule de batterie (2) à la borne électrique (6) que si l'identité du consommateur (14) transmise à l'unité d'autorisation (9) est valable.
